# EUROPÄISCHE PATENTSCHRIFT

(11) **EP 4 212 339 B1**
(45) Veröffentlichungstag und Bekanntmachung des Hinweises auf die Patenterteilung: **18.03.2026**
(21) Anmeldenummer: 23155537.6
(22) Anmeldetag: 17.01.2018
(51) Int. Cl.: B32B 37/06, B32B 41/00, B30B 15/06

(54) **VORRICHTUNG ZUM LAMINIEREN VON MEHREREN IN EINEM STAPEL ANGEORDNETEN SCHICHTEN ZU EINEM LAMINATVERBUND**
DEVICE FOR LAMINATING A PLURALITY OF LAYERS ARRANGED IN A STACK TO FORM A LAMINATE COMPOSITE
DISPOSITIF DE LAMINAGE DE PLUSIEURS COUCHES EMPILEES SUR UN COMPOSITE STRATIFIE

(30) Priorität: 14.02.2017 DE 102017102940
(43) Veröffentlichungstag der Anmeldung: 19.07.2023
(62) Teilanmeldung aus: 18152004.0
(73) Patentinhaber: Bundesdruckerei GmbH, 10969 Berlin (DE)
(72) Erfinder: Kulikovsky, Lazar, 14165 Berlin (DE); Dressel, Olaf, 14641 Wustermark (DE); Wilke, Andreas, 13509 Berlin (DE); Kulikovska, Olga, 14165 Berlin (DE)
(74) Vertreter: Mammel und Maser Patentanwälte PartG mbB

(56) Entgegenhaltungen:
- EP-A2- 1 340 611
- WO-A1-2015/148945
- DE-A1- 102010 031 421
- DE-A1- 4 141 971
- DE-A1- 4 141 972
- US-A1- 2008 190 555

## Beschreibung

Die Erfindung betrifft eine Vorrichtung zum Laminieren von mehreren in einem Stapel angeordneten Schichten zu einem Laminatverbund.

Aus der US 5,728,309 A ist ein Verfahren zur Herstellung eines organischen Matrixverbundes bekannt. Ein Oberwerkzeug und ein Unterwerkzeug umfasst jeweils einen Werkzeugeinsatz, die eine gemeinsame Kavität bilden. In diese Kavität wird eine Retorte eingelegt. Darauffolgend wird diese Retorte mittels Induktionsspulen aufgeheizt und darauffolgend einseitig mit Druck beaufschlagt, damit diese Retorte eine Kontur des Werkzeugeinsatzes annimmt.

Aus der US 6,109,903 A ist eine Vorrichtung zur Herstellung eines Gummi-Metallplattenverbundes bekannt. Zwischen einer oberen und unteren Platte wird der herzustellende Gummi-Metallplattenverbund gehalten. Des Weiteren wird der herzustellende Gummi-Metallplattenverbund seitlich durch eine Induktionsspule umgeben. Aufgrund der durch die Induktionsspule erzeugten Wirbelströme werden die Metallplatten aufgeheizt und mit den dazwischen angeordneten Gummischichten verbunden.

Aus der US 4,365,547 A ist eine Mehrplattenpresse bekannt. Ein Presszyklus beginnt mit dem Schließen der Presse, indem die Pressplatten zusammengeführt werden. Gleichzeitig wird Dampf in die Pressplatten eingeführt, um das darin enthaltene Wasser auszutreiben. Anschließend wird der Dampfdruck in der Pressplatte überwacht, um die gewünschte Temperatur in den Pressplatten aufrechtzuerhalten.

Aus der EP 1 340 611 A2 ist eine Plattenpresse mit einem Heiz- und Kühlsystem zur Herstellung beschichteter plattenförmiger Produkte bekannt. In den Pressplatten sind Kanäle für eine Heiz- und eine Kühlflüssigkeit vorgesehen. Diese Kanäle können wahlweise sowohl an einen Heizkreislauf als auch an einen Kühlkreislauf über Mischventile anschließbar sein. Diese getrennten Kanäle für die Heiz- und die Kühlflüssigkeit in der jeweiligen Pressplatte ermöglichen eine genaue Temperaturführung an der produktfernen Seite der Pressplatte, so dass im Störbetrieb einer auftretenden unerwünschten Aufheizung aktiv entgegengewirkt werden kann.

Aus der DE 10 2010 031 421 A1 ist eine Laminiervorrichtung zum Laminieren eines mehrlagigen Dokumentes bekannt, welche zwei Laminierplatten umfasst, zwischen denen ein zu laminierendes Dokument anordenbar ist. Die Laminierplatten bestehen aus mindestens einem elektrisch leitfähigen keramischen Material, welche elektrische Anschlüsse aufweisen, so dass die Laminierplatten und das Dokument durch Anlegen einer elektrischen Spannung an die elektrischen Anschlüsse während einer Aufheizphase eines Laminierprozesses erwärmbar sind. Nach einer vorbestimmten Laminierzeit des Laminierprozesses wird die Aufheizphase und somit das Heizen der Laminierzeit beendet. Darauffolgend erfolgt eine Abkühlphase, in welcher die Laminierplatten durch ein Kühlmittel gekühlt werden.

Zum Laminieren des Dokuments wird dieses zwischen die Laminierplatten gelegt, die Laminierplatten zusammengepresst und durch Anlegen einer Spannung an die elektrischen Anschlüsse werden die Laminierplatten erhitzt. Nach dem Laminieren bzw. Anschmelzen und Verbinden der einzelnen Schichten des Dokumentes wird die Aufheizung abgeschalten und die Kühlflüssigkeit den Laminierplatten zugeführt.

Aus der DE 41 41 971 A1 ist ein Verfahren und eine Vorrichtung zum Kaschieren von Schichten durch ein Presswerkzeug bekannt. Über das Presswerkzeug wird eine Druck- und Wärmeeinwirkung auf die zu laminierenden Schichten ausgeübt. Ein analoges Verfahren und eine analoge Vorrichtung ist aus der DE 41 41 972 A1 bekannt.

Die US 2008/0190555 A1 offenbart ein Verfahren und eine Vorrichtung zur Herstellung von einem Laminat. Dabei wird eine Vakuum-Druckvorrichtung eingesetzt, welche einen Druckblock, Befestigungselemente und einen Wärmeleitblock zum Aufheizen eines thermoplastischen Binders der Substrate umfasst.

Aus der WO 2015/148945 A1 ist des Weiteren ein Verfahren und eine Vorrichtung zur Lamination von steifen Substraten bekannt, wobei eine sequenzielle Anordnung von Vakuum und einer mechanischen Kraft erfolgt.

Der Erfindung liegt die Aufgabe zugrunde, eine Vorrichtung zum Laminieren von mehreren in einem Stapel angeordneten Schichten zu einem Laminatverbund vorzuschlagen, wodurch eine Verringerung der Zykluszeiten für den Laminierprozess und eine Verbesserung der Lamination erzielt wird.

Die der Erfindung zugrundeliegende Aufgabe wird durch eine Laminiervorrichtung gelöst, bei welcher das für den Laminierprozess vorgesehene obere und untere Laminierwerkzeug jeweils eine Laminierplatte umfasst, wobei die Laminierplatten metallisch ausgebildet sind und eine Wärmeleitfähigkeit von wenigstens 15 W/mK, bevorzugt 50-80 W/mK aufweisen. Dies ermöglicht einen hohen Wärmefluss. Darüber hinaus kann auch während des Laminationsprozesses eine Steuerung eines Temperaturgradienten zwischen den Laminierplatten und dem Stapel ansteuerbar sein.

Die Laminierplatte der Laminiervorrichtung ist an einem monolithischen Bauteil mit einer Trägerplatte vorgesehen, welches eine Druckkammer mit einem mit Fluid durchströmbaren Innenvolumen umfasst. Dadurch kann während der Aufheizphase ein erhitztes Fluid hindurchgeführt werden, um eine schnelle Aufheizung zu ermöglichen. Darauf folgend kann durch Zuführung eines kühlen Fluid die Abkühlphase durchgeführt werden.

Zur Überwachung des Aufheizvorganges bzw. der Laminiertemperatur der Laminierplatten wird bevorzugt zumindest während des Pressvorganges, vorzugsweise während der gesamten Aufheizphase des Laminierprozeses, die Temperatur der Laminierplatten mit zumindest einem Temperatursensor überwacht und geregelt. Dadurch kann auch bei einem zu starken Temperaturabfall ein nochmaliges kurzzeitiges Aufheizen nachgesteuert werden.

Die Laminierplatten sind mit einem Fluid aufheizbar. Dies weist den Vorteil auf, dass eine quasi trägerfreie Wärmequelle bereitgestellt wird, welche innerhalb einer kurzen Zeit den Wärmefluss während des Laminationsprozesses ansteuern kann.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
Figur 1 eine schematische Ansicht auf eine erste Ausführungsform eines Laminierwerkzeuges,
Figur 2 eine schematische Schnittansicht entlang der Linie I-I in Figur 1,
Figur 3 eine schematische Ansicht einer Laminiervorrichtung mit einem Laminierwerkzeug gemäß den Figuren 1 und 2,
Figur 4 eine schematische Seitenansicht einer nicht zur Erfindung gehörigen alternativen Ausgestaltung einer Laminiervorrichtung in einer geöffneten Position,
Figur 5 eine schematische Ansicht der Laminiervorrichtung gemäß Figur 4 in einer geschlossenen Anordnung,
Figur 6 eine schematische Seitenansicht eines oberen Presswerkzeuges mit einer Laminierplatte und an einem zugehörigen geschlossenen Fluidkreislauf,
Figur 7 ein Diagramm für eine Temperaturentwicklung im Stapel der Schichten gemäß einem Verfahren zur Herstellung eines Laminatverbundes nach dem Stand der Technik und
Figur 8 ein schematisches Diagramm einer Temperaturentwicklung im Stapel des Laminatverbundes mit den vorbeschriebenen Laminiervorrichtungen.

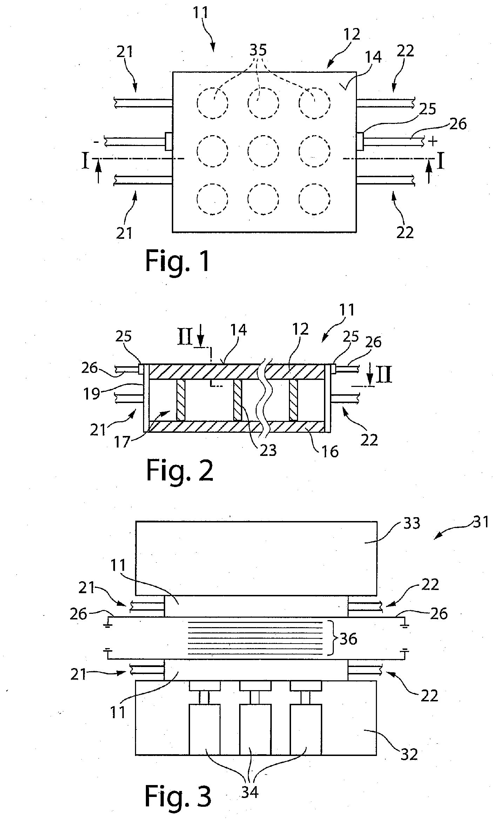

In Figur 1 ist eine schematische Ansicht auf eine erste Ausführungsform eines Laminierwerkzeuges 11 dargestellt. Eine schematische Schnittansicht entlang der Linie I-I geht aus Figur 2 hervor.

Das Laminierwerkzeug 11 umfasst eine Laminierplatte 12, welche eine beispielhaft quadratische oder rechteckförmige Kontur aufweist, entlang der sich eine Auflagefläche 14 erstreckt. Der Laminierplatte 12 gegenüberliegend ist eine Trägerplatte 16 vorgesehen, welche vorzugsweise parallel zur Laminierplatte 12 ausgerichtet ist. Dazwischenliegend ist eine Tragstruktur 17 vorgesehen, welche die Laminierplatte 12 zur Trägerplatte 16 beabstandet. Diese Tragstruktur 17 ist beispielsweise rippenförmig, stegförmig oder dergleichen ausgebildet. Diese Tragstruktur 17 ist von einer Außenwand 19 umgeben, welche an die Laminierplatte 12 und die Trägerplatte 16 anschließt. Dadurch wird ein geschlossenes Innenvolumen gebildet, innerhalb welchem die Tragstruktur 17 ausgebildet ist. An der Außenwand 19 sind ein Anschluss für zumindest einen Zulauf 21 und ein Anschluss für zumindest einen Ablauf 22 vorgesehen. Bei diesem Ausführungsbeispiel ist vorgesehen, dass beispielsweise auf einer Seite der Außenwand 19 zwei Zuläufe 21 und gegenüberliegend zwei Abläufe 22 vorgesehen sind.

Die Tragstruktur 17 ist derart ausgebildet, dass ein Medium, welches durch den Zulauf 21 in das Innenvolumen des Laminierwerkzeuges 11 gelangt über den Ablauf 22 abfließen kann. Beispielsweise können Mikrokanäle vorgesehen sein, die längs der flächigen Erstreckung des Laminierwerkzeuges 11 verlaufen. Alternativ können auch Stege 23 vorgesehen sein, die zueinander beabstandet sind und/oder Durchbrechungen oder Ausnehmungen aufweisen, um ein Durchströmen eines Mediums zu ermöglichen.

Die Laminierplatte 12 ist bevorzugt dicker als die Trägerplatte 16 ausgebildet. Die Außenwand 19 ist bevorzugt als elastische Membrane vorgesehen, so dass die Laminierplatte 12 gegenüber der Trägerplatte 16 geringfügig federnd nachgiebig ausgebildet sein kann. Bevorzugt ist das Laminierwerkzeug 11 aus einem Material hergestellt und kann beispielsweise durch ein 3D-Druckverfahren, wie beispielsweise Lasersintern oder Laserschmelzen, aufgebaut sein.

In diesem Ausführungsbeispiel ist vorgesehen, dass an der Laminierplatte 12 Anschlusskontakte 25 für elektrische Leitungen vorgesehen sind, die zu einer nicht näher dargestellten Steuerung führen. Dadurch kann die Laminierplatte 12 als Widerstandsheizelement angesteuert werden, um eine gezielte und definierte Erwärmung zu ermöglichen. Zusätzlich oder alternativ kann die Laminierplatte 12 mit einem Fluid, welches das Innenvolumen durchströmt, aufgeheizt werden.

Zum Kühlen des Laminierwerkzeuges 11 ist vorgesehen, dass ein gekühltes Medium über den Zulauf 21 zugeführt wird, das Innenvolumen durchströmt und über den Ablauf 22 abgeführt wird.

Durch die Durchströmung des Kühlmediums während Aufheizphase kann eine schnelle Steuerung, bzw. Reduzierung der Aufheiztemperatur erreicht werden.

Auf der Auflagefläche 14 des Laminierwerkzeuges 11 kann eine Prägestruktur eingebracht sein. Beispielsweise ist eine punkt- oder linienförmige Struktur eingraviert.

In Figur 3 ist eine schematische Seitenansicht einer Laminiervorrichtung 31 dargestellt, welche ein Unterwerkzeug 32 sowie ein Oberwerkzeug 33 aufweist. An dem Ober- und Unterwerkzeug 32, 33 ist jeweils ein Laminierwerkzeug 11 gemäß den Figuren 1 und 2 befestigt. Im Unterwerkzeug 32 sind beispielsweise mehrere Druckstempel 34 vorgesehen. Diese können gleichmäßig zur Auflagefläche 14 der Prägeplatte 12 verteilt angeordnet sein. Dies ist beispielsweise strichliniert in der Draufsicht in Figur 3 dargestellt. Durch diese Druckstempel 34 kann eine zusätzliche Kraft auf das Laminierwerkzeug 11 aufgebracht werden.

Zum Laminieren eines Stapels 36 aus mehreren Schichten 35 zu einem Laminatverbund 38, bei welchem die Schichten 35 unlösbar miteinander verbunden werden, wird der Stapel 36 auf ein unteres Laminierwerkzeug 11 aufgelegt. Darauffolgend wird die Laminiervorrichtung 31 geschlossen und insbesondere das Oberwerkzeug 33 auf das Unterwerkzeug 32 zubewegt, um einen Laminierdruck auf den Stapel 36 auszuüben. Bereits vor dem Schließen der Laminiervorrichtung 31 beginnt die Aufheizphase eines Laminierzyklus und das Laminierwerkzeug 11 wird beheizt, bis die einzelnen Schichten 35 des Stapels 36 zu einem Laminatverbund 38 miteinander verbunden sind. Darauffolgend wird die Aufheizphase beendet und die Abkühlphase eingeleitet. Ein Medium zum Kühlen der Laminierwerkzeuge 11 wird durch die Tragstruktur 17 hindurchgeführt. Der Laminierdruck innerhalb der Laminiervorrichtung 31 wird so lange aufrechterhalten, bis der Laminatverbund 38 abgekühlt ist. Anschließend wird die Laminiervorrichtung 31 geöffnet und das fertige Laminat kann von dem Unterwerkzeug 32 abgenommen werden. Darauffolgend ist die Laminiervorrichtung 31 wiederum für den nächsten Laminiervorgang bereit.

Alternativ zu der in Figur 3 dargestellten Ausführungsform der Laminiervorrichtung 31 kann vorgesehen sein, dass beispielsweise zwischen den Druckstempeln 34 an einer Unterseite des Laminierwerkzeuges 11, insbesondere an der Trägerplatte 16, Heizelemente 38, insbesondere elektrische Heizelemente, vorgesehen sind. Durch diese Heizelemente 38 kann ebenfalls eine Erwärmung des Laminierwerkzeuges 11 durchgeführt werden.

Der Stapel 36, der aus mehreren Schichten 35 besteht, kann beispielsweise zumindest jeweils eine äußere Schicht aus einem thermoplastischen Elastomer, welche durch Einbringen einer Temperatur aufschmelzbar ist, umfassen, so dass beispielsweise diese äußeren Schichten unter Einschluss von inneren Schichten, die beispielsweise aus Papier bestehen können, eine geschlossene Umhüllung bilden. Alternativ können die einzelnen Schichten auch alle aus einem thermoplastischen Elastomer bestehen, so dass diese zumindest an der Oberfläche anschmelzen oder aufschmelzen und sich mit der benachbarten Schicht zu einem Laminatschichtverbund, wie beispielsweise einer Karte, insbesondere einer PC-Karte, verbinden. Ein solcher Laminatverbund 38 kann eine Zutrittskarte, Identifikationskarte, Scheckkarte oder personalisierte Karte, wie beispielsweise ein Personalausweis oder dergleichen, sein.

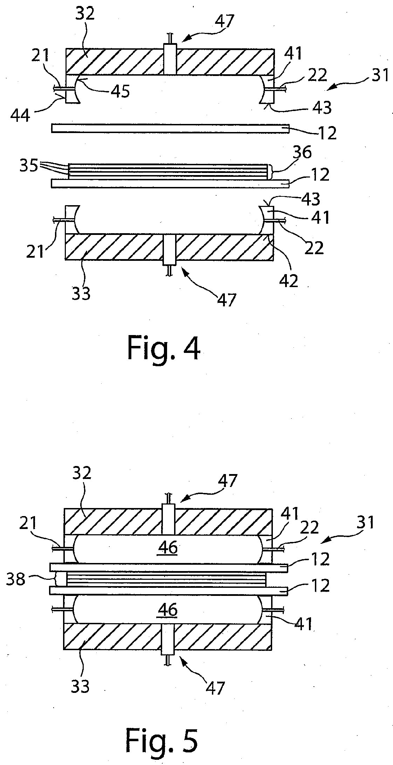

In Figur 4 ist schematisch eine alternative Ausführungsform der Laminiervorrichtung 31 dargestellt. Diese Laminiervorrichtung 31 befindet sich in einem geöffneten Zustand.

In Figur 5 ist die Laminiervorrichtung 31 in einem geschlossenen Zustand angeordnet. Die Laminiervorrichtung 31 umfasst ein Oberwerkzeug 32 und ein Unterwerkzeug 33 mit jeweils einer Laminierplatte 12 sowie einem dazwischen angeordneten Dichtungselement 41. Zwischen der oberen und unteren Laminierplatte 12 sind in einem Stapel 36 mehrere übereinanderliegende Schichten 35 auf der unteren Laminierplatte 12 aufliegend vorgesehen, die durch einen nachfolgend noch näher beschriebenen Laminiervorgang zu einem Laminatverbund 38 gemäß Figur 5 verbunden werden. Das Ober- und Unterwerkzeug 32, 33 sind beispielsweise als eine Pressplatte ausgebildet. Die Laminierplatten 12 sind beispielsweise als dünne metallische Platten ausgebildet.

Das Dichtelement 41 umfasst einen geschlossenen umlaufenden Körper, der an die flächige Erstreckung des Ober- und Unterwerkzeuges 32, 33 angepasst ist. Beispielsweise kann das Dichtelement 41 als auch das Ober- und Unterwerkzeug 32, 33 eine rechteckförmige Kontur aufweisen.

Das Dichtelement 41 weist eine obere Anlagefläche 42 zur Anlage an dem Oberwerkzeug 32 und Unterwerkzeug 33 auf. Gegenüber der oberen Anlagefläche 42 ist eine untere Anlagefläche 43 zum Anlegen an der Laminierplatte 12 vorgesehen. Das Dichtelement 41 weist bevorzugt eine innere Umfangsfläche 45 auf, die sichelförmig oder bogenförmig ausgebildet ist. Dadurch ist eine innere Stirnfläche konkav am Dichtelement 41 ausgebildet. An einer äußeren Umfangsfläche 44 können zumindest ein Zulauf 21 und zumindest ein Ablauf 22 für ein Fluid vorgesehen sein.

Zur Durchführung eines Laminiervorganges wird das Oberwerkzeug 32 vom Unterwerkzeug 33 geschlossen, so dass diese über die Laminierplatten 12 einen Druck auf die Schichten 35 des Stapels 36 zur Bildung des Laminatverbundes 37 ausüben. Während der Lamination wird durch das Oberwerkzeug 32 bzw. Unterwerkzeug 33 gegenüber der jeweiligen Laminierplatte 12 ein Druck auf das Dichtungselement 41 ausgeübt, so dass darin eine Druckkammer 46 ausgebildet ist.

Alternativ zu dem Zu- und Ablauf 21, 22 kann der Zu- und Ablauf auch in dem plattenförmigen Material des Ober- und Unterwerkzeuges 32, 33 erfolgen, so dass die Dichtung 46 ausschließlich aus Dichtungsmaterial besteht.

Zur Überwachung der Temperatur des die Druckkammer 46 durchströmenden Fluides ist bevorzugt ein Temperatursensor 47 vorgesehen, der ebenfalls mit einer nicht näher dargestellten Steuerung verbunden ist.

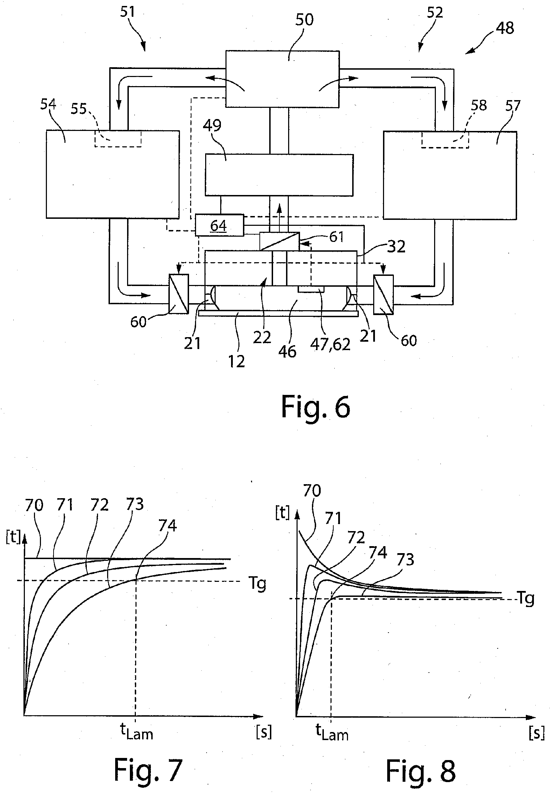

In Figur 6 ist ein Oberwerkzeug 32 mit einem daran angeschlossenen Fluidkreislauf 45 dargestellt. Analoges gilt für das Unterwerkzeug 14. Dieser Fluidkreislauf 48 umfasst einem dem Oberwerkzeug 32 zugeordneten Ablauf 22, der mit einem Niederdruckspeicher 49 zur Aufnahme des aus der Druckkammer 46 abgeführten Fluides verbunden ist. Dem Niederdruckspeicher 49 nachgeschalten ist ein Kompressor 50 vorgesehen. Von diesem aus wird ein Zuführzweig 51 für heißes Fluid und ein Zuführzweig 52 für kühles Fluid mit dem in den Niederdruckspeicher 49 gespeicherten Fluids versorgt. In dem Zuführzweig 51 ist ein Speicher 54 für heißes Fluid vorgesehen. Dieser umfasst bevorzugt ein Heizelement 55. Über eine Zuführleitung wird heißes Fluid von dem Speicher 54 dem zumindest einen Zulauf 21 am Dichtelement 41 in die Druckkammer 46 zugeführt.

Der Zuführzweig 52 für kaltes Fluid umfasst einen Speicher 57 für kaltes Fluid sowie bevorzugt ein dem Speicher 57 zugeordnetes Kühlelement 58. Von diesem Speicher 57 aus führt eine Zuführleitung zum zumindest einen Zulauf 21 am Dichtelement 41, um das kühle Fluid der Druck-kammer zuzuführen.

Dem Zulauf 21 vorgeschalten ist jeweils ein Ventil 60, insbesondere Einlassventil. Ebenso wird der Ablauf 22 über ein Ventil 61, insbesondere Auslassventil gesteuert. Ergänzend kann in dem Oberwerkzeug 32 ein Temperatur- und/oder Drucksensor 47, 62 vorgesehen sein. Des Weiteren ist eine Steuerungseinrichtung 64 vorgesehen, welche die Ventile 60, 61 steuert sowie Daten des Temperatur- und/oder Drucksensors 47, 62 erfasst und auswertet. Zusätzlich kann die Steuerungseinrichtung 64 mit dem Niederdruckspeicher 49, dem Kompressor 50, dem Heizelement 55, dem Kühlelement 58, dem Speicher 54 bezüglich Druck und/oder Temperatur an dem Speicher 57 bezüglich Druck und/oder Temperatur gekoppelt sein. Der vorbeschriebene Aufbau gilt analog für das Unterwerkzeug 33.

Zum Schließen der Laminiervorrichtung 11 wird das Oberwerkzeug 32 und das Unterwerkzeug 33 in eine Schließposition gemäß Figur 3 und 5 übergeführt. Durch die aufgebrachte Presskraft der Ober- und Unterwerkzeuge 32, 33 wird das jeweilige Dichtelement 41 zwischen der Laminierplatte 12 und dem Ober- und Unterwerkzeug 32, 33 eingepresst und bildet eine dadurch gebildete Druckkammer 46 ab. Anschließend wird durch die Steuerungseinrichtung 64 ein Öffnen des Ventils 60 am Zulauf 21 für heißes Fluid angesteuert, so dass aus dem Speicher 54 ein heißes Fluid in die Druckkammer 46 geführt wird. Nach Erreichen eines vorbestimmten Druckes in der Druckkammer 46, welches über den Druck- und/oder Temperaturfühler 47, 62 erfasst wird, wird das Ventil 60 geschlossen. Ergänzend kann über die Heizelemente 55 die Temperatur in der Druckkammer 41 noch weitere aufgeheizt werden. Sobald die Lamination, insbesondere das Verschweißen der Schichten 35 erfolgt ist, wird das Ventil 61 geöffnet, so dass das heiße Fluid aus der Druckkammer 46 über den Ablauf 22 abströmen und in den Niederdruckspeicher 49 gelangen kann. Gleichzeitig wird das Ventil 60 am Zulauf 21 für das kühle Fluid geöffnet, so dass aus dem Speicher 57 kühles Fluid nachfließen kann. Sobald durch den Temperatursensor 47 in der Druckkammer kühles Fluid erfasst wird, schließt das Ventil 61. Über den Speicher 57 wird weiterhin kühles Fluid zugeführt, bis der erforderliche Druck mit kühlem Fluid in der Druckkammer 46 aufgebaut ist. Dies wird wiederum durch den Temperatur- und/oder Drucksensor 47, 62 erfasst. Daraufhin wird das Ventil 60 für das kühle Fluid geschlossen. Nach dem Abkühlen des Laminatverbundes 38 kann das Ventil 61 vom Ablauf 22 wieder geöffnet werden. Ebenso kann zumindest ein Ventil 60 für die Nachführung des kühlen oder heißen Fluids erfolgen, um nach dem Abheben des Oberwerkzeuges 32 vom Unterwerkzeug 33 jeweils die Laminierplatte 12 von dem Ober- und Unterwerkzeug 32, 33 abzuheben. Das gespeicherte Fluid im Niederdruckspeicher 49 kann mittels dem Kompressor 50 komprimiert und wahlweise dem Zuführzweig 51, 52 zugeführt werden. Bevorzugt wird in dem Niederdruckspeicher 49 vorhandenes wärme Fluid dem Zuführzweig 51 und kühles Fluid dem Zuführzweig 52 zugeführt. Durch die Anordnung der Speicher 54, 57 in dem Fluidkreislauf 48 kann ein schnelles Befüllen der Druckkammer 46 erfolgen, insbesondere ein Aufheizen des Stapels 36 und darauffolgend ein schnelles Abkühlen des Laminatverbundes 38 ermöglicht sein.

In Figur 7 ist ein Diagramm für eine Aufheizphase eines Laminierprozesses zur Herstellung eines Laminatverbundes 38 bei einem aus dem Stand der Technik bekannten Verfahren dargestellt. Über die X-Achse ist die Zeit und über die Y-Achse die Temperatur aufgetragen. Die Tg-Linie zeigt die Glasübergangstemperatur der zu laminierenden Schichten 35 im Stapel 36 zu einem Laminatverbund 38. Dabei ist die dargestellte Glasübergangstemperatur an diejenige Schicht 35 angepasst, welche die höchste Temperatur zum Aufschmelzen oder Anschmelzen umfasst.

Nach dem Zusammenführen der Laminierwerkzeuge 11 zum Stapel 36 werden diese mit einer konstanten Temperatur beheizt. Im Falle einer ersten Ausführungsform der Figuren 1 bis 3 und bei der Ausführungsform gemäß Figur 4 und 5 werden die jeweiligen Druckkammern mit einem heißen Fluid durchströmt. Im Falle einer alternativen Ausführungsform der Figuren 1 bis 3 werden die den Laminierplatten 12 zugeordneten Widerstandsheizelemente bestromt und auf eine konstante Temperatur erhitzt. Die Aufheizphase wird solange mit einer konstanten Temperatur betrieben, bis die einzelnen Schichten 35 an- oder aufgeschmolzen und miteinander laminiert sind. Dabei ergibt sich für die Laminierplatte 12 ein Temperaturverlauf gemäß der Kennlinie 71. Für eine Schicht 35 im Stapel 36, beispielsweise aus Polycarbonat mit einer Materialstärke von 0,1 mm, ergibt sich ein Temperaturverlauf gemäß der Kennlinie 72. Für eine weitere Schicht 35 im Stapel 36, beispielsweise aus Polycarbonat mit einer Schichtstärke von 0,4 mm, ergibt sich die Kennlinie 73. Ein Laminierzeitpunkt 74, zu welchem die Schichten 35 an- oder aufgeschmolzen sind und sich miteinander verbinden ergibt sich dann nachdem die Glasübergangstemperatur der Schicht 73 erreicht wurde.

In Figur 8 ist ein analoges Diagramm zu Figur 7 dargestellt. Aufgrund des Verfahrens wird eine erhebliche Verkürzung des Laminierzeitpunktes 74 erzielt, wie eine Gegenüberstellung der Diagramme zeigt.

Innerhalb der Aufheizphase des Laminierprozesses werden die Laminierplatten 12 mit einer Aufheiztemperatur aufgeheizt, die durch die Kennlinie 70 dargestellt ist. Die angesteuerte Aufheiztemperatur liegt zu Beginn der Aufheizphase weit oberhalb der Glasübergangstemperatur der zu laminierenden Schicht 35 im Stapel 36. Durch eine derart überhöhte Ansteuerung der Aufheiztemperatur der Laminierplatten 12 wird ein verkürztes Aufheizen der Laminierplatten 12 ermöglicht. Dadurch wird ein erster steiler Anstieg der Temperatur in den Laminierplatten gemäß der Kennlinie 71 ermöglicht. Dies wiederum bewirkt, dass die in den Laminierplatten 12 vorhandene Temperatur auf die Schichten 35 im Stapel 36 übertragen werden. Dadurch werden ebenfalls steile Anstiege für die Schicht gemäß Kennlinie 73 und 74 ermöglicht. Im weiteren Verlauf der Aufheizphase wird die laminierplattenangesteuerte Aufheiztemperatur gemäß der Kennlinie 70 reduziert. Dabei wird eine Reduzierung dahingehend vorgenommen, dass die Temperatur der Laminierplatten 12 oberhalb der Linie Tg verbleibt. Aus dem Diagramm gemäß Figur 8 ist zu erkennen, dass die Kennlinie 73 zu einem wesentlich früheren Laminierzeitpunkt 74 die Linie Tg kreuzt als dies bei dem Verfahren gemäß Figur 7 der Fall ist. Dadurch wird zu einem früheren Zeitpunkt ein An- oder Aufschmelzen der verbindenden Schichten 35 erzielt, wodurch eine Verkürzung des Arbeitszyklus einhergeht.

Die Reduzierung der angesteuerten Aufheiztemperatur für die Laminierplatten 12 wird bevorzugt exponentiell angesteuert. Alternativ kann auch eine Sprungfunktion oder ein schrittweises Reduzieren ermöglicht sein.

## Patentansprüche

1. Laminiervorrichtung, mit zumindest einem Laminierwerkzeug (11), welches ein Oberwerkzeug (32) und ein Unterwerkzeug (33) sowie jeweils zumindest eine Laminierplatte (12) umfasst, zwischen denen ein Stapel (36) von mehreren Schichten (35) zur Bildung eines Laminatverbundes (38) anordenbar ist,
**dadurch gekennzeichnet,**
- **dass** die zumindest eine Laminierplatte (12) als eine metallische Laminierplatte (12) ausgebildet ist, welche eine Wärmeleitfähigkeit von wenigstens 15 W/mK aufweist,
- **dass** die zumindest eine Laminierplatte (12) und eine Trägerplatte (16) als ein monolithisches Bauteil ausgebildet sind ist und das Laminierwerkzeug (11) bilden, welches eine Druckkammer mit einem Fluid durchströmbaren Innenvolumen aufweist.

2. Laminiervorrichtung nach Anspruch 1, **dadurch gekennzeichnet, dass** die zumindest eine metallische Laminierplatte (12) eine Wärmeleitfähigkeit von 50 - 80 W/mK aufweist.

3. Laminiervorrichtung nach einem der vorhergehenden Ansprüche, **dadurch gekennzeichnet, dass** während des Laminiervorganges in der Aufheizphase mit zumindest einem Temperatursensor (43) die Temperatur der Laminierplatten (12) erfassbar ist und die Aufheiztemperatur für die Laminierplatten (12) geregelt ist.

## Claims

1. Laminating device, comprising at least one laminating tool (11) which comprises an upper tool (32) and a lower tool (33) as well as at least one laminating plate (12) in each case, between which a stack (36) of several layers (35) is arrangeable to form a laminate composite (38),
**Characterized in that**
- the at least one laminating plate (12) is designed as a metallic laminating plate (12) having a thermal conductivity of at least 15 W/mK,
- the at least one laminating plate (12) and a carrier plate (16) are designed as a monolithic component and form the laminating tool (11), which has a pressure chamber with an internal volume through which a fluid can flow.

2. Laminating device according to claim 1, **characterized in that** the at least one metallic laminating plate (12) has a thermal conductivity of 50-80 W/mK.

3. Laminating device according to one of the preceding claims, **characterized in that** during the laminating process in the heating phase, the temperature of the laminating plates (12) is detectable by at least one temperature sensor (43) and the heating temperature for the laminating plates (12) is regulated.

## Revendications

1. Dispositif de laminage, comprenant au moins un outil de stratification (11) qui comprend un outil supérieur (32) et un outil inférieur (33) ainsi qu'au moins une plaque de laminage (12) entre lesquels peut être disposée une pile (36) de plusieurs couches (35) pour former un composite stratifié (38),
**caractérisé en ce que**
- la, au moins une, plaque de stratification (12) est conçue comme une plaque de laminage métallique (12) qui présente une conductivité thermique d'au moins 15 W/mK,
- **en ce que** la, au moins une, plaque de laminage (12) et une plaque de support (16) sont conçues comme un composant monolithique et forment l'outil de laminage (11), qui présente une chambre de pression avec un volume intérieur pouvant être traversé par un fluide.

2. Dispositif de laminage selon la revendication 1, **caractérisé en ce que** la, au moins une, plaque de laminage métallique (12) présente une conductivité thermique de 50 à 80 W/mK.

3. Dispositif de laminage selon l'une des revendications précédentes, **caractérisé en ce que** pendant le processus de laminage, dans la phase de chauffage, la température des plaques de laminage (12) peut être mesurée à l'aide d'au moins un capteur de température (43) et la température de chauffage des plaques de laminage (12) est régulée.
